# EUROPÄISCHE PATENTANMELDUNG

(11) **EP 2 371 873 A1**
(43) Veröffentlichungstag der Anmeldung: **05.10.2011**
(21) Anmeldenummer: 10158927.3
(22) Anmeldetag: 01.04.2010
(51) Int. Cl.: C08G 18/02, C08G 18/28, C08G 18/79

(54) **Verfahren zur Carbodiimidisierung**

(71) Anmelder: Bayer MaterialScience AG, 51368 Leverkusen (DE)
(72) Erfinder: Die Erfindernennung liegt noch nicht vor

(57) **Zusammenfassung**

Die vorliegende Erfindung betrifft wässrige Dispersionen enthaltend hydrophilierte Polycarbodiimide, Verfahren zur Herstellung der erfindungsgemässen wässrigen Dispersionen, deren Verwendung als Bestandteil von Bindemitteln in Klebstoffen, Lacken, Anstrichen, Papierstreichmassen oder in Faservliesen sowie Gegenstände aus Holz, Metall, Textil, Leder oder Kunststoff, die mit der erfindungsgemässen wässrigen Dispersion behandelt sind.

## Beschreibung

Die vorliegende Erfindung betrifft Polycarbodiimide und ein Verfahren zu deren Herstellung, insbesondere wässrige Dispersionen enthaltend hydrophilierte Polycarbodiimide, Verfahren zur Herstellung der erfindungsgemässen wässrigen Dispersionen, deren Verwendung als Bestandteil von Bindemitteln in Klebstoffen, Lacken, Anstrichen, Papierstreichmassen oder in Faservliesen sowie Gegenstände oder Verbünde aus beispielsweise Holz, Metall, Textil, Leder und/oder Kunststoff, die mit der erfindungsgemässen wässrigen Dispersion behandelt sind.

Allgemein betrachtet sind Carbodiimidgruppen in einfacher Weise aus zwei Isocyanatgruppen unter Abspaltung von Kohlendioxid erhältlich:

R-N=C=O + O=C=N-R → R-N=C=N-R + CO₂

Ausgehend von Diisocyanaten sind so oligomere Verbindungen mit mehreren Carbodiimidgruppen und gegebenenfalls Isocyanatgruppen, insbesondere endständigen Isocyanatgruppen, erhältlich, sogenannte Polycarbodiimide. Die noch vorhandenen Isocyanatgruppen können z.B. mit Alkoholen, Thiolen, primären oder sekundären Aminen unter Bildung von Urethan, Thiourethan oder Harnstoffgruppen weiter umgesetzt werden. Die Polycarbodiimide können daher neben freien Isocyanatgruppen auch deren vorstehend genannten Umsetzungsprodukte enthalten.

Die Herstellung der Polycarbodiimide aus Diisocyanaten ist an sich bekannt und wird beispielsweise in US-A 2 840 589, US-A 2 853 473, US-A 2 941 966 und EP-A 628541 beschrieben. Allen gängigen Verfahren heutzutage ist gemein, dass als Katalysatoren (Carbodiimidisierungskatalysatoren) Verbindungen des Phosphors verwendet werden wie verschiedene Phospholenoxide, zum Beispiel 1-Methyl-2 (und/oder 3)-phospholen-1-oxid, 3-Methyl-2 (und/oder 3)-phospholen-1-oxid, 1-Phenyl-2(und/oder 3)-phospholen-1-oxid, 1-Phenyl-3-methyl-2 (und/oder 3)-phospholen-1-oxid und 1-Ethyl-2(und/oder 3)-phospholen-oxid. Diese Katalysatoren verbleiben gewöhnlich in den Produkten. Besonders schonend und frei von Nebenprodukten lassen sich Polycarbodiimide auch durch eine Katalyse gemäß der DE-A 2 504 400 und der DE-A 2 552 350 herstellen. Hier werden die Phospholenoxide in einer in Carbodiimid unlöslichen Matrix eingebracht und nach der Carbodiimidisierung aus dem Reaktionsgemisch entfernt. EP-A 609698 offenbart ein Verfahren zur Herstellung von Carbodiimiden, in dem CO₂ am Ende der Reaktion in das Reaktionsgemisch eingeleitet wird, um den Katalysator aus dem Produkt zu entfernen. Die Carbodiimidisierung von Diisocyanaten in Gegenwart von Katalysatoren wie Phospholenoxid ist bereits grundsätzlich bekannt. Es ist auch bekannt, dass sich aromatische Isocyanate unter deutlich milderen Reaktionsbedingungen sowie mit geringeren Mengen an Phospholenoxid-Katalysator zu Carbodiimiden umsetzen lassen (siehe dazu zum Beispiel T.W. Campbell et al. in J. Am. Chem. Soc., 84, (1962), 3673-3677). Während für die Reaktion von aromatischen Isocyanaten Phospholinoxid-Katalysatormengen von teilweise deutlich weniger als 0.1 Gew.% und Temperaturen < 170°C häufig ausreichen, benötigt man für die Carbodiimidisierung aliphatischer und cycloaliphatischer Isocyanate Temperaturen um 180°C und Phospholenoxid-Katalysatormengen in der Größenordnung von 0.5 Gew.% , wie z.B in EP-A 952146 und WO-A 2005/003204 gelehrt wird. Insbesondere die Isocyanatverbindungen, wie z.B. Di-4,4'-diisocyanatocyclohexylmethan, Isophorondiisocyanat etc., die sekundäre Isocyanatgruppen haben, reagieren träge und benötigen größere Mengen an Carbodiimidisierungskatalysatoren.

Phosphororganyle, unter anderem auch Phospholenoxide, sind giftige und sehr teure Verbindungen. Die Verwendung von größeren Mengen Phospholenoxid als Katalysator kann daher dazu führen, dass die Synthese des Polycarbodiimids unwirtschaftlich und darüber hinaus mit arbeitshygienischen Problemen verbunden wird.

Eine Aufgabe der vorliegenden Erfindung besteht daher darin, ein effizientes Verfahren zur Herstellung von wässrigen Dispersionen von aliphatischen und cycloaliphatischen Polycarbodiimiden zur Verfügung zu stellen, das die Herstellung des Polycarbodiimids in kurzer Zeit mit geringen Katalysatormengen ermöglicht.

Die vorstehend genannte Aufgabe wurde durch den Gegenstand der vorliegenden Erfindung gelöst.

Ein Gegenstand der vorliegenden Erfindung ist ein Verfahren zur Herstellung von wässrigen Dispersionen von Polycarbodiimid, wobei in wenigstens einem Schritt wenigstens ein aliphatisches oder cycloaliphatisches Polyisocyanat bei einer Temperatur im Bereich von 160 bis 230 °C in Gegenwart von 50 bis 3000 ppm (ppm = part per million, 1 ppm = 0.0001%, molare Anteile) Carbodiimidisierungskatalysator bezogen auf die molare Menge an Polyisocyanat zu einem Polycarbodiimid mit einer mittleren Funktionalität von 1 bis 10 Carbodiimideinheiten umgesetzt wird, wobei die Reaktionsgase zeitweise oder permanent gezielt aus dem Reaktionsmedium abgeführt werden.

Im Sinne der vorliegenden Erfindung bedeutet die mittlere Funktionalität von Carbodiimideinheiten die durchschnittliche Anzahl der Carbodiimideinheiten. Die mittlere Funktionalität kann auch eine gebrochene Zahl sein. Die mittlere Funktionalität beträgt 1 bis 10, vorzugsweise 2 bis 7. Wenn die mittlere Funktionalität höher als 10 ist, ist die Dispergierbarkeit des hydrophilierten Polycarbodiimids in Wasser niedrig.

Im Sinne der vorliegenden Erfindung bezeichnet ein Reaktionsgas eine gasförmige Verbindung, die bei der Carbodiimidisierung von Polyisocyanaten entsteht. Vorwiegend besteht das Reaktionsgas aus Kohlendioxid.

Im Sinne der vorliegenden Erfindung wird unter dem gezielten Abführen der Reaktionsgase aus dem Reaktionsmedium das Entfernen der Reaktionsgase durch Anlegen von Vakuum oder das Austreiben der Reaktionsgase mit Hilfe von Inertgasen verstanden. Bevorzugt sind, bei Einsatz von Inertgasen, Stickstoff und Edelgase bzw. deren Mischung. Auch eine Kombination der beiden Verfahrensmerkmale ist möglich, indem Vakuum angelegt und Inertgas zugeführt wird. Dies kann zeitgleich oder auch abwechselnd erfolgen

Bevorzugt wird ein aliphatisches bzw. cycloaliphatisches Polyisocyanat aus der Gruppe bestehend aus Methylendiisocyanat, Dimethylendiisocyanat, Trimethylendiisocyanat, Tetramethylendiisocyanat, Pentamethylendiisocyanat, Dipropyletherdiisocyanat, 2,2-Dimethylpentandiisocyanat, 3-Methoxyhexandiisocyanat, Octamethylendiisocyanat, 2,2,4-Trimethylpentandiisocyanat, Nonamethylendiisocyanat, Decamethylen-diisocyanat, 3-Butoxyhexandiisocyanat, 1,4-Butylenglykoldipropyletherdiisocyanat, Thiodihexyldiisocyanat, Metaxylylendiisocyanat, Paraxylylendiisocyanat, Tetramethylxylylendiisocyanat, 4,4'-Dicyclohexylmethandiisocyanat (H12MDI), Isophorondiisocyanat (IPDI), Hexamethylendiisocyanat (HDI), hydriertes Xylylendiisocyanat (H₆XDI), 1,12-Diisocyanatdodecan (DDI), Norbornandiisocyanat (NBDI) und 2,4-Bis(8-isocyanatoctyl)-1,3-dioctylcyclobutan (OCDI) ausgewählt.

Besonders bevorzugt sind Isophorondiisocyanat (IPDI), Hexamethylendiisocyanat (HDI), hydriertes Xylylendiisocyanat (H₆XDI), 4,4'-Dicyclohexylmethandiisocyanat (H12MDI). Ganz besonders bevorzugt ist das cycloaliphatische Polyisocyanat 4,4'-Dicyclohexylmethandiisocyanat (H12MDI).

Bevorzugt ist der Carbodiimidisierungskatalysator eine Organophosphorverbindung, besonders bevorzugt Organophosphorverbindungen ausgewählt aus der Gruppe bestehend aus Phosphanoxid, Phospholanoxid und Phospholenoxid, sowie deren Sulfo- und Iminoanaloga. Die Phosphan-, Phospholen- und Phospholan-Oxide, -Sulfide sowie -Iminoderivate können unter anderem aus entsprechenden Vorgängern mit dreiwertigem Phosphor wie Phosphanen, Phospholanen und Phospholenen *in situ* generiert werden.

Bevorzugt wird das Phospholenoxid aus der Gruppe bestehend aus 3-Methyl-1-phenyl-2-phospholen-1-oxid, 3-Methyl-1-ethyl-2-phospholen-1-oxid, 1,3-Dimethyl-2-phospholen-1-oxid, 1-Phenyl-2-phospholen-1-oxid, 1-Ethyl-2-phospholen-1-oxid, 1-Methyl-2-phospholen-1-oxid ausgewählt.

Ebenfalls geeignete Carbodiimidisierungskatalysatoren können ausgewählt werden aus der Gruppe bestehend aus 1-Butyl-2-phospholen-1-oxid, 1-(2-Ethylhexyl)-2-phospholen-1-oxid, 1-Methyl-2-phospholen-1-sulfid, 1-(2-Chloroethyl)-2-phospholen-1-oxid, 1-p-Tolyl-2-phospholen-1-oxid, 1-1-Chloromethyl-2-phospholen-1-oxid, 1,2-Dimethyl-2-phospholen-1-oxid, 1-Methyl-3-Chloro-2-phospholen-1-oxid, 1-Methyl-3-Bromo-2-phospholen-1-oxid, 1-Chlorophenyl-2-phospholen-1-oxid, 1, 3 , 4-Trimethyl-2-phospholenoxid, 1,2,4-Trimethyl-2-phospholen-1-oxid, 1,2,2-Trimethyl-2-phospholen-1-oxid, 1-Phenyl-2-phospholen-1-sulfid, und 1-Phenyl-2,3-dimethyl-2-phospholen-1-oxid. Die vorgenannten Phospholenderivate können auch als 3-Phospholenisomere in der reinen Form oder als Isomerengemische mit den 2-Phopsholenisomeren vorliegen.

Ebenfalls geeignete Carbodiimidisierungskatalysatoren können auch ausgewählt werden aus der Gruppe bestehend aus Diphenylphosphinsäure und ihre Salze, Bis-(2,4,4,-trimethylpentyl)-phosphinsäure, Tributylphosphan, Triisobutylphosphansulfid, Trialkylphosphanoxide, wie Trioctylphosphanoxid oder Trihexylphosphanoxid, Triphenylphosphan, Tetraphenylphosphinbromid, Tetrabutylphosphinchlorid, Tetrabutylphosphinbromid, Bis-(2,4,4-trimethylpentyl)-dithiophosphonsäure und Bis-(2,4,4-trimethylpentyl)-monothiophosphon-säure.

Die Umsetzung von Polyisocyanat zu Polycarbodiimid erfolgt in Gegenwart von von 50 bis 3000 ppm, bevorzugt von 100 bis 2000 ppm, besonders bevorzugt in Gegenwart von 150 bis 1000 ppm, ganz besonders bevorzugt in Gegenwart von 200 bis 700 ppm Carbodiimidisierungskatalysator bezogen auf die molare Menge an Polyisocyanat.

Die Umsetzung von Polyisocyanat zu Polycarbodiimid erfolgt bei einer Temperatur im Bereich von 160 bis 230 °C, bevorzugt im Bereich von 180 °C bis 210 °C, besonders bevorzugt im Bereich von 185 °C bis 205 °C.

Ein weiterer Gegenstand der vorliegenden Erfindung ist ein Verfahren zur Herstellung von wässrigen Dispersionen von Polycarbodiimid, umfassend die Schritte
a) Umsetzen von wenigstens einem aliphatischem oder cycloaliphatischem Polyisocyanat bei einer Temperatur im Bereich von 160 bis 230 °C in Gegenwart von 50 bis 3000 ppm Carbodiimidisierungskatalysator bezogen auf die molare Menge an Polyisocyanat zu einem Polycarbodiimid mit einer mittleren Funktionalität von 1 bis 10 Carbodiimideinheiten umgesetzt wird, wobei die Reaktionsgase zeitweise oder permanent gezielt aus dem Reaktionsmedium abgeführt werden,
b) Umsetzen des in Schritt a) erhaltenen Polycarbodiimids mit wenigstens einer hydrophilen Verbindung, die mindestens gegenüber Isocyanat- und/oder Carbodiimidgruppen reaktionsfähige Gruppe trägt, zum Beispiel aber nicht darauf beschränkt, ausgewählt aus der Gruppe bestehend aus Polyethoxymonoolen, Polyethoxydiolen, Polyethoxypolypropoxymonoolen, Polyethoxypolypropoxydiolen, Polyethoxymonoaminen, Polyethoxydiaminen, Polyethoxypolypropoxymonoaminen, Polyethoxypolypropoxydiaminen, Hydroxyalkylsulfonaten, Aminalkylsulfonaten, Polyethoxymono- und -dithiolen, Polyethoxymono- und - dicarbonsäuren, Mono- und Dihydroxycarbonsäuren bzw. deren Salzen zu einem hydrophilierten Carbodiimid,
   gegebenenfalls weiteres Umsetzen der nicht abreagierten Isocyanatgruppen mit weiteren gegenüber Isocyanatgruppen reaktionsfähigen Verbindungen, wie zum Beispiel mit Wasser, Alkoholen, Thiolen, Aminen, Mineral- und Carbonsäuren und
c) Dispergieren der in Schritt b) erhaltenen Verbindung in Wasser.

Bevorzugt erfolgt die Umsetzung des in Schritt a) erhaltenen, Isocyanat-Gruppen enthaltenden Polycarbodiimids gemäß der vorliegenden Erfindung so, dass 10 bis 70 Molprozent (mol.-%) der im Polycarbodiimid vorhandenen Isocyanat-Gruppen mit mindestens einer hydrophilen Verbindung als Teilschritt b1) des Schritts b) umgesetzt werden, wobei die hydrophile Verbindung ausgewählt ist aus der Gruppe bestehend aus Polyethoxymonoolen, Polyethoxydiolen, Polyethoxypolypropoxymonoolen, Polyethoxypolypropoxydiolen, Polyethoxymono-aminen, Polyethoxydiaminen, Polyethoxypolypropoxymonoaminen, Polyethoxypoly-propoxydiaminen, Hydroxyalkylsulfonaten, Aminalkylsulfonaten, Polyethoxymono- und -dithiolen, Polyethoxymono- und -dicarbonsäuren. Im Teilschritt b2) des Schritts b) werden 30-90 mol.-% der verbleibenden Isocyanat-Gruppen dann mit mindestens einer gegenüber Isocyanatgruppen reaktionsfähigen Verbindung umgesetzt, zum Beispiel, Polyethoxymonoolen, Polyethoxydiolen, Polyethoxypolypropoxymonoolen, Polyethoxypolypropoxydiolen, Polyethoxymonoaminen, Polyethoxydiaminen, Polyethoxypolypropoxymonoaminen, Polyethoxypolypropoxydiaminen, Hydroxyalkylsulfonaten, Aminalkylsulfonaten, Polyethoxymono- und -dithiolen, Polyethoxymono- und -dicarbonsäuren, Wasser, C1 bis C30 Alkoholen, C1 bis C30 Thiolen, Aminen, Mineral- und Carbonsäuren.

Bevorzugt erfolgt die Umsetzung der Polycarbodiimide in Teilschritt b1) des Schritts b) mit wenigstens einer Verbindung ausgewählt aus der Gruppe der Verbindungen entsprechend der Formel I:

R¹-O-(CH₂-CH₂-O)ₘ-H Formel I

R¹ = C1 bis C30 Alkyl, Aryl oder Acylgruppe
m = 4 bis 60
besonders bevorzugt mit wenigstens einer Verbindung ausgewählt aus der Gruppe entsprechend der Formel I, wobei R¹ eine Methylgruppe ist und m = 10 bis 30.
Ganz besonders bevorzugt ist Monomethoxypolyethylenglykol mit m = 15-20.

Bevorzugte C1 bis C30 Alkohole, die zu einer Weiterreaktion der im Polycarbodiimid vorhandenen und mit den hydrophilen Verbindungen nicht vollständig umgesetzten Isocyanatgruppen in Teilschritt b2) des Schritts b) verwendet werden können, sind zum einen Wasser, niedermolekulare Monoalkohole oder auch Diole mit einem Molekulargewicht bevorzugt von 32 bis 500, besonders bevorzugt von 62 bis 300 g/mol. Ganz besonders bevorzugt werden kurzkettige Monoalkohole also verzweigte oder unverzweigte Monoalkohole mit 1 bis 30 C-Atomen wie Methanol, Ethanol, Propanol, 1-Butanol, 1-Pentanol, 1-Hexanol, Cyclohexanol, Cyclohexylmethanol, 2-Ethylhexanol, Dodecanol, Stearylalkohol oder Oleylalkohol, deren Gemische untereinander und Gemische deren Isomere sowie kurzkettige Dialkohole mit 2 bis 60 C-Atomen wie 1,4-Butandiol, 1,5-Pentandiol, 1, 6-Hexandiol, Cyclohexandiol, Cyclohexandimethanol, 1,8-Octandiol, 1,9-Nonadiol, 1,10-Decandiol, 1,11-Undecandiol, 1,12-Dodecandiol, 1,13-Tridecandiol, Tricyclodecandimethanol, deren Gemisch untereinander sowie Gemische deren Isomere verwendet.

Die Reihenfolge der Teilschritte b1 und b2) des Schritts b) kann so festgelegt sein, dass Teilschritt b1 vor Teilschritt b2), beide gleichzeitig oder in der umgekehrten Reihenfolge erfolgen kann.

Die Umsetzung in Schritt b) erfolgt bei einer Temperatur im Bereich von 50 bis 200 °C, bevorzugt von 100 bis 170°C und besonders bevorzugt im Bereich von 120 bis 150 °C. Erfolgt die Bildung des hydrophilierten Polycarbodiimids sehr langsam, so ist die Verwendung eines herkömmlichen Urethanisierungs-Katalysators möglich.

Optional wird die wässrige Dispersion von hydrophiliertem Polycarbodiimid in einem Schritt d) auf einen pH-Wert im Bereich von 7 bis 12 (bei 23°C), besonders bevorzugt im Bereich von 8 bis 11, eingestellt. Dafür können Aminlösungen, Laugen und herkömmliche Pufferlösungen verwendet werden. Der pH-Wert kann in Schritt d) durch Zugabe einer Base ausgewählt aus der Gruppe bestehend aus Alkalihydroxiden, Ammoniak und tertiären Aminen eingestellt werden. Als Alkalihydroxide seien beispielhaft Lithiumhydroxid, Natriumhydroxid und Kaliumhydroxid genannt. Als tertiäres Amin seien beispielhaft ein Trialkylamin wie Triethylamin und Ethanolamine genannt. In einer alternativen Ausführungsform kann ein Puffer ausgewählt aus der Gruppe bestehend aus Phosphatpuffern, Tris(hydroxymethyl)-aminomethan-Puffern und Aminoalkylsulfonsäure-Puffern zur Einstellung des pH-Wertes verwendet werden.

Ein weiterer Gegenstand der Erfindung sind Verbindungen der allgemeinen Formel II, 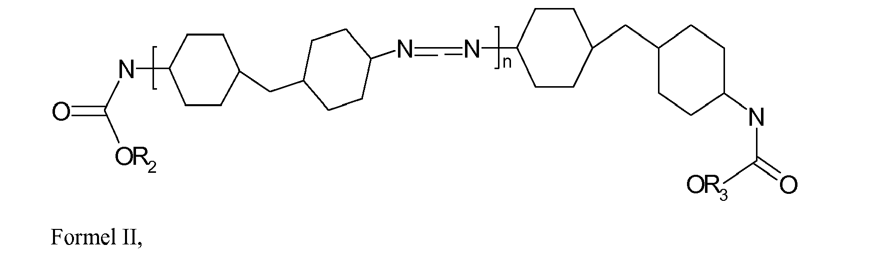 worin R² und R³, unabhängig voneinander, für einen von einer Verbindung ausgewählt aus der Gruppe bestehend aus einem Monoalkoxy-poly(ethylenglykol) gemäß der allgemeinen Formel I mit m = 4 bis 60, und einem von C1 bis C30 Alkohol oder einem C5 bis C90 Monoalkoxyethylenglykol abgeleiteten Rest stehen. Bevorzugte Verbindungen der allgemeinen Formell II tragen unabhängig voneinander R² und R³ Reste abgeleitet von Monomethoxypoly(ethylenglykol) gemäß der allgemeinen Formel I mit n = 10-20 und C1 bis C30 Monoalkoxyethylenglykol. Die besonders bevorzugte Verbindung der allgemeinen Formel II trägt unabhängig voneinander R² und R³ Reste abgeleitet von Monomethoxypoly(ethylenglykol) gemäß der allgemeinen Formel I mit n = 10-17 und Monobutoxyethylenglykol.

Die wässrigen Polycarbodiimid-Dispersionen und/oder Lösungen, hergestellt nach erfindungsgemäßen Verfahren, haben üblicherweise einen Feststoffgehalt von 10 bis 80 Gew.%, bevorzugt von 20 bis 60 Gew.-% und besonders bevorzugt von 30 bis 50 Gew.%.

Die mittlere Teilchengröße d50-Wert der in Wasser dispergierten Polycarbodiimidpartikel liegt üblicherweise im Bereich von 5 - 500 nm, bevorzugt von 15 bis 200 nm, besonders bevorzugt von 25 bis 100 nm. Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid. Z. und Z. Polymere 250 (1972), 782-796) bestimmt werden. Die mittleren Teilchengrößen und Teilchengrössenverteilungen können auch über Lichtstreumethoden bestimmt werden, die allerdings weniger präzise sind, jedoch mit den Ultrazentrifugationsmessungen recht gut korrelieren können, sofern keine polymodalen oder sehr breiten Teilchengrößenverteilungen vorliegen.

Die erfindungsgemäßen wässrigen Dispersionen eignen sich insbesondere als Bestandteil von Bindemitteln für Beschichtungsmittel oder Imprägnierungsmittel, z.B. für Klebstoffe, Lacke, Anstriche, Papierstreichmassen oder als Bindemittel für Faservliese, d.h. in allen Fällen, in denen eine Vernetzung und Erhöhung der inneren Festigkeit (Kohäsion) gewünscht ist.

Je nach Verwendungszweck kann die wässrige Dispersion Zusatzstoffe wie Verdicker, Verlaufshilfsmittel, Pigmente oder Füllstoffe, Bakterizide, Fungizide etc. enthalten.

Bei der Verwendung als Klebstoff können die erfindungsgemässen wässrigen Dispersionen neben obengenannten Zusatzstoffen noch spezielle, in der Klebstofftechnologie übliche Hilfs-und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Polymer-Dispersionen, welche als Klebstoff Verwendung finden, enthalten besonders bevorzugt Alkyl(meth)acrylate als Hauptmonomere im Polymer. Bevorzugte Anwendungen im Klebstoffgebiet sind auch Kaschierklebstoffe, z.B. für die Verbund- und Glanzfolienkaschierung (Verklebung von transparenten Folien mit Papier oder Karton). Die erfindungsgemässen wässrigen Dispersionen können nach üblichen Verfahren auf die zu beschichtenden oder zu imprägnierenden Substrate aufgebracht werden.

Mit den erfindungsgemässen wässrigen Dispersionen als Bestandteil von Bindemitteln lassen sich insbesondere Gegenstände aus Holz, Metall, Textil, Leder oder Kunststoffe verkleben, imprägnieren oder beschichten.

Die Erfindung soll anhand der nachfolgend aufgeführten Beispiele näher erläutert werden.

### Beispiele

### Ausgangsstoffe:

- **Cycloaliphatisches Polyisocyanat H12MDI**: 4,4'-Diisocyanatodicyclohexylmethan, CAS-Nr. 79103-62-1: (Desmodur®-W, Bayer MaterialScience AG, Leverkusen, DE)
- **Carbodiimidisierungskatalysator 1, 1-MPO:** technisches Gemisch aus 1-Methyl-2-phospholen-1-oxid und 1-Methyl-3-phospholen-1-oxid, CAS-Nr. 872-45-7 und 930-38-1: (Clariant AG, Muttenz, CH)
- **Monomethoxy-poly(ethylenglykol) 750, MPEG 750**: CAS-Nr. 9004-74-4: (Aldrich, DE)
- **Butoxyethanol:** CAS-Nr. 111-76-2: (SysKem Chemie GmbH, Wuppertal, DE)

### Analytische Bestimmungen:

- **Bestimmung des Isocyanatgehalts durch Titration:** es erfolgte die Umsetzung einer abgewogenen Probe mit einem Überschuss an Dibutylamin und Rückwärtstitration des überschüssigen Amins mit einer Säure. Die NCO-Wertangabe erfolgt in Gew.-%.
- **Mittlere Teilchengrößenbestimmung:** die Dispersionen bzw. Lösungen wurden mittels Laserkorrelations-Spektroskopie (Gerät: Malvern Zetasizer 1000, Malvern Inst. Limited)

Alle analytischen Bestimmungen beziehen sich, soweit nicht anders angegeben, auf eine Temperatur von 23°C.

### Allgemeine Vorschrift zu Carbodiimidisierungsreaktion (Schritt a)

Polyisocyanat und Carbodiimidisierungskatalysator werden in einem beheizbaren Reaktionsgefäß (2 L Glasskolben oder 5L-Edelstahlreaktor) vorgelegt und unter Rühren unter Stickstoffstrom auf 180°C binnen 2 Stunden erhitzt. Danach wird der Stickstoffstrom beendet und das Reaktionsgemisch wird innerhalb 1 Stunde auf 200°C erhitzt und weitergerührt. Optional wird in gewissen Zeitabständen Vakuum mittels einer Ölvakuumpumpe angelegt und danach der Druckausgleich durch Stickstoffzufuhr sichergestellt. Der Reaktionsverlauf wird durch Probenentnahmen und anschließende Titration des NCO-Gehalts (Ausgangswert bei H12MDI 32 Gew.-%) kontrolliert Typischer Zielbereich des NCO-Gehalts lag bei 5.5-9.5% und entsprach einem mittleren Carbodiimidisierungsgrad von 4-7. Dies bedeutet, dass 4 bis 7 Carbodiimidgruppen pro Polycarbodiimidmolekül vorhanden sind.

Die experimentellen Ergebnisse sind in der nachstehenden Tabelle 1 zusammengefasst:

| Beispiel Nr. | Katalysatormenge, ppm (molar) | Katalysatormenge, ppm (Gewicht) | gezieltes Entfernen der Reaktionsgase | Zeit bis NCO-Gehalt von < 10%, Stunden | End-NCO-Gehalt, Gew.-% | Zeit bis End-NCO-Gehalt, Stunden |
|---|---|---|---|---|---|---|
| 1 (Vergleich) | 450 | 200 | nein | 55 | 5.9 | 100 |
| 2 | 450 | 200 | alle 2 Stunden Druckreduktion auf 500 mbar für jeweils eine Dauer von 5 Minuten | 14 | 6.2 | 20 |
| 3 | 450 | 200 | permanente Druckreduktion auf 500 mbar | 13 | 5.2 | 30 |

Betrachtet man den Stand der Technik, zum Beispiel die Beispiele aus EP-A 952146, die eine Carbodiimidisierungsreaktion von H12MDI bei 180°C beschreiben, stellt man fest, dass sehr hohe Mengen um 5000 ppm (Gew.) bzw. 6800 ppm (molar) an Carbodiimidisierungskatalysator benötigt werden, um einen Carbodiimidisierungsgrad von 4 (d.h. NCO-Wert von 9.2 Gew.-%) nach ca. 15 Stunden zu erzielen. Vergleichsbeispiel 1 zeigt, dass eine deutliche Katalysatorreduktion auf 200 ppm (Gew.) bzw. 450 ppm (molar) und eine moderate Erhöhung der Reaktionstemperatur um ca. 10% mit einer deutlichen Verlängerung der Reaktionszeit einhergehen: ein vergleichbarer Carbodiimidisierungsgrad wird erst nach 55 Stunden Reaktion zeigt. Erst wenn man verfahrenstechnisch Maßnahmen zum gezielten Abführen der Reaktionsgase aus dem Reaktionsmedium einleitet, zum Beispiel Druckreduktion, wird die Carbodiimidisierungsreaktion deutlich beschleunigt.

Herstellung eines hydrophilierten Polycarbodiimids (Schritt b) und einer Polycarbodiimid-Dispersion (Schritt c).

876 g Monomethoxypoly(ethylenglykol) 750 (MPEG 750) werden in einem 15 L Edelstahlkessel vorgelegt und unter Rühren und in einer Stickstoffatmosphäre auf 140°C erhitzt. Dazu werden 2748 g des Polycarbodiimids aus Beispiel 2 (NCO-Wert von 6.2 Gew.-%) zugegeben. Das Reaktionsgemisch wird eine Stunde bei 140°C weitergerührt (NCO-Gehalt von 3.3 Gew.-%). Anschließend werden 376 g Butoxyethanol zugegeben und für 1 weitere Stunde gerührt (NCO-Gehalt von 0 Gew.-%). Danach wird auf 95°C abgekühlt, mit 6000 g Wasser vermischt und 1 Stunde weitergerührt. Man erhält anschließend eine fast transparent aussehende Dispersion mit einem pH-Wert von 9, einer mittleren Teilchengröße von 35 nm und einem Feststoffgehalt von 40 Gew.-%.

Die erhaltene Dispersion ist gut geeignet als Bindemittelbestandteil für besonders gut härtende, isocyanat-ärmere oder gänzlich isocyanat-frei Lack- sowie Klebstoffanwendungen mit verbesserten mechanischen Eigenschaften, wie z.B. erhöhtes Modulniveau, höhere Zugfestigkeit und schnellere Härteentwicklung des Lacks oder der Klebstoffschicht.

## Patentansprüche

1. Verfahren zur Herstellung von Polycarbodiimid und von wässrigen Dispersionen von Polycarbodiimid,
wobei in wenigstens einem Schritt wenigstens ein aliphatisches oder cycloaliphatisches Polyisocyanat bei einer Temperatur im Bereich von 160 bis 230 °C in Gegenwart von 50 bis 3000 ppm Carbodiimidisierungskatalysator bezogen auf die molare Menge an Polyisocyanat zu einem Polycarbodiimid mit einer mittleren Funktionalität von 1 bis 10 Carbodiimideinheiten umgesetzt wird, **dadurch gekennzeichnet, dass** die Reaktionsgase zeitweise oder permanent abgeführt werden.

2. Verfahren nach Anspruch 1 umfassend die Schritte
a) Umsetzen von wenigstens einem aliphatischem oder cycloaliphatischem Polyisocyanat bei einer Temperatur im Bereich von 160 bis 230 °C in Gegenwart von 50 bis 3000 ppm Carbodiimidisierungskatalysator bezogen auf die molare Menge an Polyisocyanat zu einem Polycarbodiimid mit einer mittleren Funktionalität von 1 bis 10 Carbodiimideinheiten, wobei die Reaktionsgase zeitweise oder permanent abgeführt werden,
b) Umsetzen des in Schritt a) erhaltenen Polycarbodiimids mit wenigstens einer Verbindung ausgewählt aus der Gruppe bestehend aus Polyethoxymonoolen, Polyethoxydiolen, Polyethoxypolypropoxymonoolen, Polyethoxypolypropoxydiolen, Polyethoxymonoaminen, Polyethoxydiaminen, Polyethoxypolypropoxymonoaminen, Polyethoxypolypropoxydiaminen, Hydroxyalkylsulfonaten, Aminalkylsulfonaten, Polyethoxymono- und -dithiolen, Polyethoxymono- und - dicarbonsäuren, und
c) Dispergieren der in Schritt b) erhaltenen Verbindung in Wasser.

3. Verfahren nach Anspruch 1 oder 2, **dadurch gekennzeichnet, dass** die Umsetzung von aliphatischem oder cycloaliphatischem Polyisocyanat zu Polycarbodiimid bei einer Temperatur im Bereich von 180 bis 210 °C erfolgt.

4. Verfahren nach Anspruch 1 oder 2, **dadurch gekennzeichnet, dass** die Umsetzung von aliphatischem oder cycloaliphatischem Polyisocyanat zu Polycarbodiimid in Gegenwart von 100 bis 2000 ppm Carbodiimidisierungskatalysator bezogen auf die molare Menge an Polyisocyanat erfolgt.

5. Verfahren nach Anspruch 1 oder 2, **dadurch gekennzeichnet, dass** die Reaktionsgase durch Anlegen von Vakuum oder Einleiten von Inertgas entfernt werden.

6. Verfahren nach Anspruch 1 oder 2, **dadurch gekennzeichnet, dass** der Carbodiimidisierungskatalysator eine Organophosphorverbindung ist.

7. Verfahren nach Anspruch 6, **dadurch gekennzeichnet, dass** die Organophosphorverbindung ein Phospholenoxid ist.

8. Verfahren nach Anspruch 7, **dadurch gekennzeichnet, dass** das Phospholenoxid eine Verbindung ausgewählt aus der Gruppe bestehend aus 1-Butyl-2-phospholen-1-oxid, 1-(2-Ethylhexyl)-2-phospholen-1-oxid, 1-Methyl-2-phospholen-1-sulfid, 1-(2-Chloroethyl)-2-phospholen-1-oxid, 1-p-Tolyl-2-phospholen-1-oxid, 1-1-Chloromethyl-2-phospholen-1-oxid, 1,2-Dimethyl-2-phospholen-1-oxid, 1-Methyl-3-Chloro-2-phospholen-1-oxid, 1-Methyl-3-Bromo-2-phospholen-1-oxid , 1-Chlorophenyl-2-phospholen-1-oxid, 1,3,4-Trimethyl-2-phospholenoxid, 1,2,4-Trimethyl-2-phospholen-1-oxid, 1,2,2-Trimethyl-2-phospholen-1-oxid, 1-Phenyl-2-phospholen-1-sulfid und 1-Phenyl-2,3-dimethyl-2-phospholen-1-oxid ist.

9. Verfahren nach Anspruch 2, **dadurch gekennzeichnet, dass** die Umsetzung in Schritt b) bei einer Temperatur im Bereich von 100 bis 170 °C erfolgt.

10. Verfahren nach Anspruch 2, **dadurch gekennzeichnet, dass** die wässrigen Dispersionen von hydrophiliertem Polycarbodiimid in einem Schritt d) auf einen pH-Wert im Bereich von 7 bis 12 eingestellt werden.

11. Verbindungen der allgemeinen Formel II, 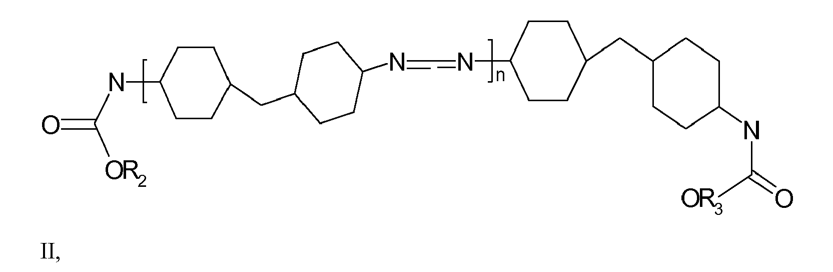 worin R² und R³, unabhängig voneinander, für einen von einer Verbindung ausgewählt aus der Gruppe bestehend aus einem Monoalkoxy-poly(ethylenglykol) gemäß der allgemeinen Formel I
R¹-O-(CH₂-CH₂-O)ₙ-H Formel I
R¹ = C1 bis C30 Alkyl, Aryl oder Acylgruppe
n = 4 bis 30
und einem von C1 bis C30 Alkohol oder einem C1 bis C30 Monoalkoxyethylenglykol abgeleiteten Rest stehen.

12. Wässrige Dispersion enthaltend wenigstens eine Verbindung der allgemeinen Formel I gemäß Anspruch 11.

13. Verwendung einer wässrigen Dispersion gemäß Anspruch 12 oder erhältlich gemäß einem oder mehreren der Ansprüche 1 bis 10 als Bindemittel.

14. Substrat ausgewählt aus der Gruppe bestehend aus Holz, Metall, Textil, Leder und Kunststoff, das mit einer wässrigen Dispersion gemäß Anspruch 12 oder erhältlich gemäß einem oder mehreren der Ansprüche 1 bis 10 verklebt, imprägniert oder beschichtet ist.

15. Polycarbodiimid erhältlich nach dem Verfahren nach Anspruch 1.
